# EUROPEAN PATENT SPECIFICATION

(11) **EP 3 637 671 B1**
(45) Date of publication and mention of the grant of the patent: **12.06.2024**
(21) Application number: 18869430.1
(22) Date of filing: 08.05.2018
(51) Int. Cl.: H04L 9/40, H04L 9/08, B61L 15/00, B61L 27/20, H04L 9/06, H04W 4/42

(54) **METHOD AND SYSTEM FOR CLASSIFYING AND STORING KEYS**
VERFAHREN UND SYSTEM ZUR KLASSIFIZIERTEN SPEICHERUNG VON SCHLÜSSELN
PROCÉDÉ ET SYSTÈME DE MÉMORISATION CLASSIFIÉE DE CLÉS

(30) Priority: 20.10.2017 CN 201711004627
(43) Date of publication of application: 15.04.2020
(73) Proprietor: CRSC RESEARCH & DESIGN INSTITUTE GROUP CO., LTD., Fengtai District Beijing 100070 (CN)
(72) Inventor: MA, Jiangfan, Beijing 100070 (CN); ZHOU, Xingtao, Beijing 100070 (CN); YANG, Tao, Beijing 100070 (CN); ZHENG, Yichuan, Beijing 100070 (CN); LIU, Muqi, Beijing 100070 (CN); ZHANG, Xinze, Beijing 100070 (CN)
(74) Representative: Liesegang, Eva
(86) International application number: PCT/CN2018/085946
(87) International publication number: WO 2019/076032

(56) References cited:
- EP-A1- 2 039 583
- WO-A1-2009/027380
- CN-A- 102 170 450
- CN-A- 102 238 004
- CN-A- 105 142 137
- CN-A- 107 968 707
- JP-A- 2011 228 777
- US-A1- 2013 230 173
- B. Ning ET AL: "CTCS-Chinese Train Control System" In: "Advanced Train Control Systems", 29 June 2010 (2010-06-29), WIT Press, XP055126651, ISBN: 978-1-84564-494-9 vol. 1, pages 1-7, DOI: 10.2495/978-1-84564-494-9/01, * paragraphs [0002] - [0004]; figure 1 *

## Description

### TECHNICAL FIELD

The present disclosure relates to the field of information security technology, and more particular to a method and system for classifying and storing keys.

### BACKGROUND

The Radio Blocking Center (RBC) is the core equipment of the Class 3 (C3) train control system of the Chinese Train Control System (CTCS) and meets the overall train control requirements of the C3 train control system. The radio blocking center generates control information such as Movement Authority, line description Temporary Speed Restriction of the controlled train according to the train status, the track occupancy temporary speed restriction command, the interlock route status, and the disaster protection information as provided by the onboard subsystem, the ground subsystem and the ground external system, and transmits the aforesaid information to the C3 onboard subsystem through a wireless communication system.

In the existing RBC technical solution, the keys of the ground device and the onboard device used by the RBC device are uniformly stored in a single key file. During the host software initialization process in the RBC device, the key configuration data information is obtained from the single key file by a file reading manner for secure communication.

In the existing RBC technical solution, an open network is between the onboard device and the ground device, a one-key-for-one-device management method is adopted, and a closed network is between the ground device and the ground device, and all ground devices use the same key. The ground device and the onboard device are different in terms of management severity degree and workflow. The key of the new onboard device needs to be generated by the key management department, and the key of the new ground device only needs to inherit the previous key and does not need to be regenerated. The key management method of storing the two types of keys in a single key file makes the work of key creation and modification more difficult and complicated. In addition, the prior art also has the problem of difficulty and complexity of the uniform key creation caused when the severity degree of the key management method and the different work processes are not considered during the software design.

A radio communication system for automobiles which updates a common key table from a roadside unit to an in-vehicle unit is described in US 2013/0230173 A1.

### SUMMARY

The present application utilizes a key management method in which keys for a ground device and an onboard device are separately stored, so as to separately manage keys whose management modes, severity degrees, and workflows are different, thereby effectively reducing key integration and management difficulty. In particular, the present invention provides a method according to claim 1 and train control system according to claim 9.

According to one aspect of the present disclosure, there is provided a method for classifying and storing keys in a train control system, the method comprising:
monitoring a access message sent by a new device that initially accessed a network;
determining a device type of the new device based on the access message, and generating a device identifier for the new device according to the device type, wherein the device type includes a ground device and an onboard device;
when the device type is a ground device, generating a ground device key of the new device according to a uniform root key of a ground area where the new device is located and the device identifier, and storing the ground device key into a ground device key file;
when the device type is an onboard device, calculating a hash value of the device identifier, generating an onboard device key of the new device according to the hash value, and storing the onboard device key into an onboard device key file; and
encrypting the ground device key file and the onboard key file separately by using a public key, separately storing the encrypted ground device key file and the encrypted onboard device key file into a secure storage device.

In addition, the method further comprises: encrypting the ground device key file and the onboard device key file separately using a public key, and storing the encrypted ground device key file and the encrypted onboard device key file into the secure storage device.

In addition, the access message carries the following content related to the new device: device type, device model, software version, and device power consumption.

In addition, said generating a device identifier for the new device according to the device type comprises: when the device type is a ground device, generating for the new device a device identifier that identifies the ground device.

In addition, said generating a device identifier for the new device according to the device type comprises: when the device type is an onboard device, generating for the new device a device identifier that identifies the onboard device.

In addition, a different ground area has a unique uniform root key, and a correspondence table of ground areas and uniform root keys is stored in the secure storage device.

In addition, the ground device key comprises a fixed portion and a derivative portion, the fixed portion can be used to identify a ground area where the ground equipment is located, and the derivative portion can identify the ground device.

In addition, calculating a hash value of the device identifier comprises: calculating a hash value of the device identifier based on MD5 or SHA-1, and generating an onboard device key of the new device based on the hash value.

In addition, after encrypting the ground device key file and the onboard device key file separately using a public key, sending a private key corresponding to the public key to a Radio Block Center.

In addition, the method further comprises: obtaining the encrypted ground device key file and the encrypted onboard device key file from the secure storage device after the Radio Block Center is activated.

In addition, the Radio Block Center decrypts the encrypted ground device key file by using the private key to obtain the ground device key file, obtains a plurality of ground device keys from the ground device key file, and determines the number of the plurality of ground device keys.

In addition, the Radio Block Center decrypts the encrypted onboard device key file by using the private key to obtain an onboard device key file, obtains a plurality of onboard device keys from the onboard device key file, and determines the number of the plurality of onboard device keys.

In addition, the Radio Block Center combines the plurality of ground device keys and the plurality of onboard device keys, stores them into a cache, and determines a first number of ground device keys and onboard device keys required in a current communication scheme.

In addition, the Radio Blocking Center determines a second number of devices according to request sent by a communicating unit, and sends the ground device key and the onboard device key required in the current communication scheme to the communicating unit when the second number is equal to the first number.

According to another aspect of the present application, there is provided a train control system for classifying and storing keys, the system comprising:
a monitoring unit, for monitoring a access message sent by a new device that initially accessed a network;
an initializing unit, for determining a device type of the new device based on the access message, and generating a device identifier for the new device according to the device type, wherein the device type includes a ground device and an onboard device;
a key generating unit, for generating, when the device type is a ground device, a ground device key of the new device according to a uniform root key of a ground area where the new device is located and the device identifier and storing the ground device key into a ground device key file, and for generating, when the device type is an onboard device, an onboard device key of the new device according to the device identifier of the new device, and storing the onboard device key into an onboard device key file; and
a storing unit, for separately storing the ground device key file and the onboard device key file into a secure storage device.

In addition, the system further comprises: the storing unit encrypts the ground device key file and the onboard device key file separately using a public key, and stores the encrypted ground device key file and the encrypted onboard device key file into the secure storage device.

In addition, the access message carries the following content related to the new device: device type, device model, software version, and device power consumption.

In addition, the initializing unit generates a device identifier for the new device according to the device type comprises: when the device type is a ground device, the initializing unit generates for the new device a device identifier that identifies the ground device.

In addition, the initializing unit generates a device identifier for the new device according to the device type comprises: when the device type is an onboard device, the initializing unit generates for the new device a device identifier that identifies the onboard device.

In addition, a different ground area has a unique uniform root key, and a correspondence table of ground areas and uniform root keys is stored in the secure storage device.

In addition, the ground device key comprises a fixed portion and a derivative portion, the fixed portion can be used to identify a ground area where the ground equipment is located, and the derivative portion can identify the ground device.

In addition, the key generating unit calculates a hash value of the device identifier comprises: calculating a hash value of the device identifier based on MD5 or SHA-1, and generating an onboard device key of the new device based on the hash value.

In addition, after the storing unit encrypts the ground device key file and the onboard device key file separately using a public key, the storing unit sends a private key corresponding to the public key to a Radio Blocking Center.

In addition, the system further comprises: the Radio Block Center obtains the encrypted ground device key file and the encrypted onboard device key file from the secure storage device.

In addition, the Radio Block Center decrypts the encrypted ground device key file by using the private key to obtain the ground device key file, obtains a plurality of ground device keys from the ground device key file, and determines the number of the plurality of ground device keys.

In addition, the Radio Block Center decrypts the encrypted onboard device key file by using the private key to obtain an onboard device key file, obtains a plurality of onboard device keys from the onboard device key file, and determines the number of the plurality of onboard device keys.

In addition, the Radio Block Center combines the plurality of ground device keys and the plurality of onboard device keys, stores them into a cache, and determines a first number of ground device keys and onboard device keys required in a current communication scheme.

In addition, the Radio Block Center determines a second number of devices according to request sent by a communicating unit, and sends the ground device key and the onboard device key required in the current communication scheme to the communicating unit when the second number is equal to the first number.

The advantageous technical effect of adopting the technical solutions of the present application is that the difficulty of key integration can be sufficiently reduced, and the key update modification of the onboard device and the ground device can be performed independently.

### BRIEF DESCRIPTION OF THE DRAWINGS

Exemplary embodiments of the present disclosure can be more completely understood with reference to the following drawings:
FIG. 1 is a schematic diagram of performing key management in the prior art;
FIG. 2 is a schematic diagram of managing an onboard device key in accordance with a preferred embodiment of the present disclosure;
FIG. 3 is a schematic diagram of managing a ground device key in accordance with a preferred embodiment of the present disclosure;
FIG. 4 is a schematic structural diagram of a system for classifying and storing keys in accordance with a preferred embodiment of the present disclosure;
FIG. 5 is a schematic structural diagram of a method for classifying and managing keys in accordance with a preferred embodiment of the present disclosure; and
FIG. 6 is a schematic structural diagram of a method for classifying and storing keys in accordance with a preferred embodiment of the present disclosure.

### DETAILED DESCRIPTION OF THE EMBODIMENTS

The exemplary embodiments of the present disclosure are now described with reference to the drawings, however, the present disclosure may be embodied in many different forms, and is not limited to the embodiments described herein. These embodiments are provided to disclose the present disclosure, to fully convey the scope of the present disclosure to a person skilled in the art. The terms used in the exemplary embodiments shown in the drawings are not intended to limit the present disclosure. In the figures, the same units/elements are given the same reference signs.

Unless otherwise defined, all terms (including technical and scientific terms) used herein have the meaning as commonly understood by a person of ordinary skill in the art. It will be further understood that terms, such as those defined in commonly used dictionaries, should be interpreted as having a meaning that is consistent with their meaning in the context of the relevant art and will not be interpreted in an idealized or overly formal sense.

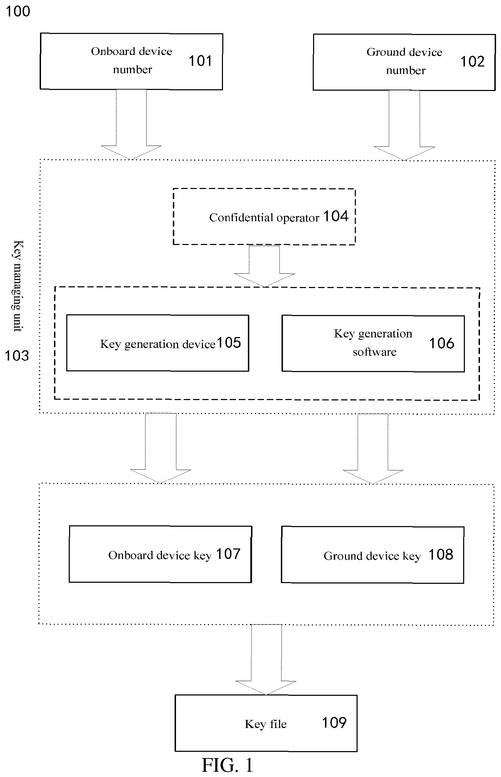

FIG. 1 is a schematic diagram of performing key management in the prior art. In the prior art, the key of a newly accessed onboard device needs a new key to be generated through the key management department, and the key of a newly accessed ground device only needs to inherit the previous key and does not need to be regenerated. As shown in FIG. 1, a key managing unit 103 is configured to generate an onboard device key and a ground device key and can store and maintain the onboard device key and ground device key that are generated. Wherein, when the onboard device number is inputted to the key managing unit 103, a confidential operator 104 uses a key generation software 106 in a key generation device 105 and generates the onboard device key based on the onboard device number. When the ground device number is inputted into the key managing unit 103, the confidential operator 104 can directly acquire the ground device key of the ground device number using the key generation device 105. The key managing unit 103 stores the generated one or more onboard device keys and ground device keys into a single key file. However, the key management method of uniformly storing the two types of keys in a single key file results in difficulty and complexity during key creation and modification.

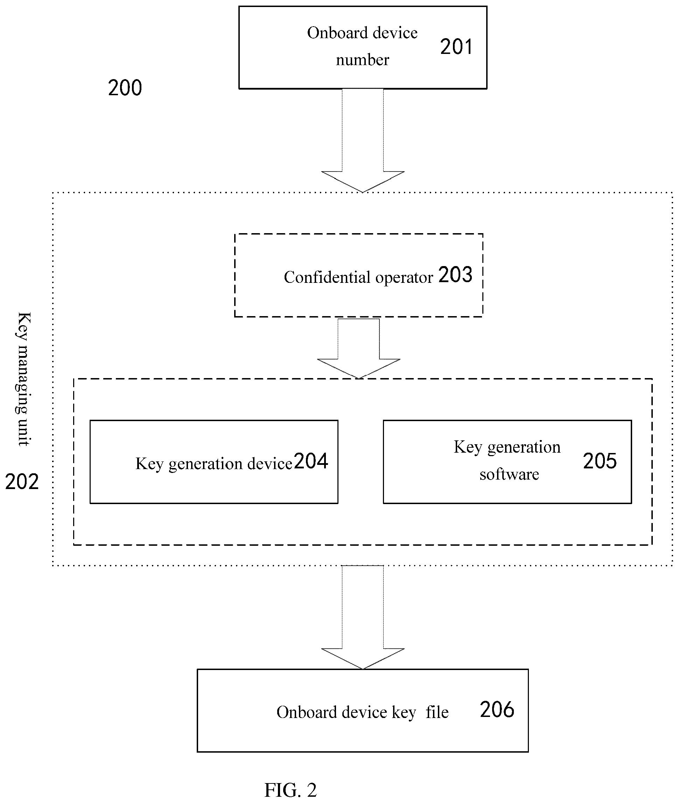

FIG. 2 is a schematic diagram of managing an onboard device key in accordance with a preferred embodiment of the present disclosure. For the onboard device, a key managing unit 202 acquires an identifier of the onboard device, such as an onboard device number. A confidential operator 203 activates a key generation device 204 and runs a key generation software 205 in the key generation device 204. Further, the key generation software 205 calculates a hash value of the device identifier, and generates an onboard device key of the new device according to the hash value. Further, the key generation software 205 calculates a hash value of the device identifier based on MD5 or SHA-1. After generating the onboard device key, the key managing unit 202 stores the onboard device key into the onboard device key file.

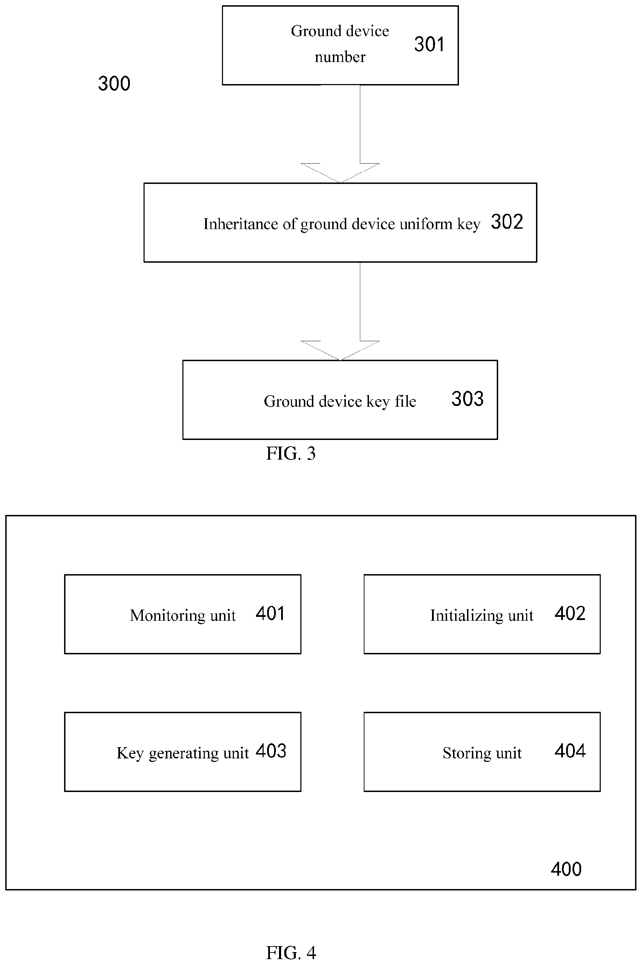

FIG. 3 is a schematic diagram of managing 300 a ground device key in accordance with a preferred embodiment of the present disclosure. For the ground device, the present application generates a ground device key of the new device according to a uniform root key of the ground area where the new device is located and the device identifier, and stores the ground device key into the ground device key file. Further, the ground device key of the new device is obtained based on inheritance of the uniform root key. Further, the present application may generate a ground device key capable of identifying its identity for the ground device based on an identifier of the ground device, such as a ground device number. To this end, the ground device key comprises a fixed portion and a derivative portion, wherein the fixed portion can be used to identify a ground area where the ground device is located, and the derivative portion is capable of identifying the ground device. Further, different ground areas each have a unique uniform root key, and a correspondence table of the ground area and the uniform root key is stored in the secure storage device. After generating the onboard device key, the present application stores the onboard device key into the onboard device key file.

FIG. 4 is a schematic structural diagram of a system 400 for classifying and storing keys in accordance with a preferred embodiment of the present disclosure. The system 400 can determine a device type of the new device according to a access message monitored by a monitoring unit of the system 400, and generates a device identifier for the new device according to the device type. When the device type is a ground device, the system 400 generates a ground device key of the new device according to a uniform root key of a ground area where the new device is located and the device identifier and stores the ground device key into a ground device key file; when the device type is an onboard device, the system 400 computes a hash value of the device identifier, and generates an onboard device key of the new device according to the hash value, and stores the onboard device key into an onboard device key file. The system 400 encrypts the ground device key file and the onboard device key file separately using a public key, and stores the encrypted ground device key file and the encrypted onboard device key file into the secure storage device.

As shown in FIG. 4, the system 400 comprises: a monitoring unit 401, an initializing unit 402, a key generating unit 403 and a storing unit 404. Further, the monitoring unit 401 monitors a access message sent by a new device that initially accessed a network. The access message carries the following content related to the new device: device type, device model, software version, and device power consumption. Usually, when a new device accesses the network, a access message needs to be sent to notify other devices.

Further, the initializing unit 402 determines a device type of the new device based on the access message, and generates a device identifier for the new device according to the device type, wherein the device type includes a ground device and an onboard device. When the device type is a ground device, the initializing unit generates for the new device a device identifier that identifies the ground device. When the device type is an onboard device, the initializing unit generates for the new device a device identifier that identifies the onboard device.

Further, when the device type is a ground device, the key generating unit 403 generates a ground device key of the new device according to a uniform root key of a ground area where the new device is located and the device identifier and stores the ground device key into a ground device key file. A different ground area has a unique uniform root key, and a correspondence table of ground areas and uniform root keys is stored in the secure storage device. The ground device key comprises a fixed portion and a derivative portion, wherein the fixed portion can be used to identify a ground area where the ground equipment is located, and the derivative portion can identify the ground device.

When the device type is an onboard device, the key generating unit 403 computes a hash value of the device identifier, and generates an onboard device key of the new device according to the hash value. The key generating unit calculates a hash value of the device identifier comprises: calculating a hash value of the device identifier based on MD5 or SHA-1. After generating the onboard device key, the key generating unit 403 stores the onboard device key into an onboard device key file.

Further, the storing unit 404 encrypts the ground device key file and the onboard device key file separately using a public key, and stores the encrypted ground device key file and the encrypted onboard device key file in the secure storage device. After encrypting the ground device key file and the onboard device key file separately using a public key, a private key corresponding to the public key is sent to a Radio Block Center.

The Radio Block Center obtains the encrypted ground device key file and the encrypted onboard device key file from the secure storage device. The Radio Block Center decrypts the encrypted ground device key file by using the private key to obtain a ground device key file, obtains a plurality of ground device keys from the ground device key file, and determines the number of the plurality of ground device keys. The Radio Block Center decrypts the encrypted onboard device key file by using the private key to obtain an onboard device key file, obtains a plurality of onboard device keys from the onboard device key file, and determines the number of the plurality of onboard device keys. The Radio Block Center combines the plurality of ground device keys and the plurality of onboard device keys, stores them into a cache, and determines a first number of ground device keys and onboard device keys required in a current communication scheme. The Radio Block Center determines a second number of devices according to request sent by a communicating unit, and sends the ground device key and the onboard device key required in the current communication scheme to the communicating unit when the second number is equal to the first number. That is, when the number of the ground device key and the onboard device key required in the current communication scheme is equivalent to the number of the devices that request to communicate, the ground device key and the onboard device key required in the current communication scheme are sent to the communicating unit.

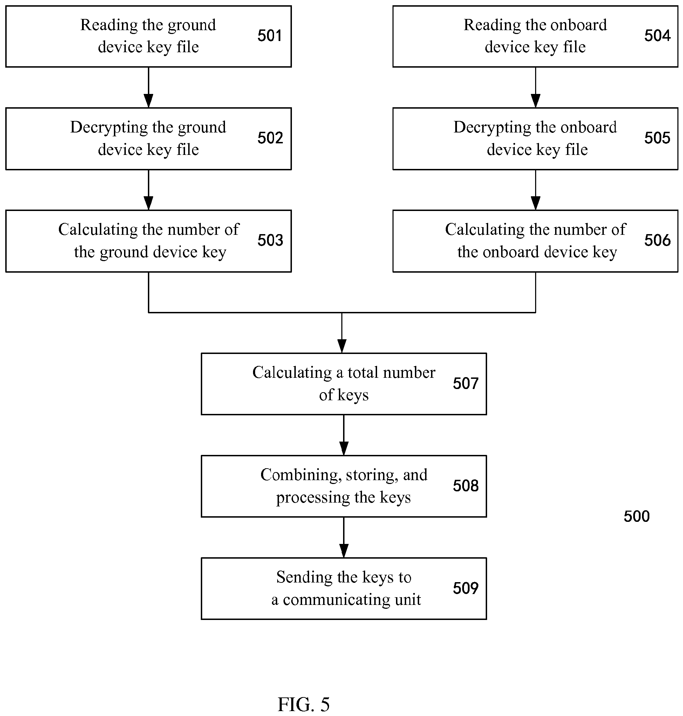

FIG. 5 is a schematic structural diagram of a method for classifying and managing keys in accordance with a preferred embodiment of the present disclosure. The Radio Block Center RBC is activated when needing to process data in the railway system or needing to use the signal for train control. In step 501, the Radio Block Center obtains the encrypted ground device key file from the secure storage device. In step 502, the Radio Block Center decrypts the encrypted ground device key file by using the private key to obtain a ground device key file. In step 503, the Radio Block Center obtains a plurality of ground device keys from the ground device key file, and determines the number of the plurality of ground device keys.

In step 504, the Radio Block Center obtains the encrypted onboard device key file from the secure storage device. In step 505, the Radio Block Center decrypts the encrypted onboard device key file by using the private key to obtain an onboard device key file. In step 506, the Radio Block Center obtains a plurality of onboard device keys from the onboard device key file, and determines the number of the plurality of onboard device keys.

In step 507, the Radio Block Center determines a total number of keys, that is, the first number, according to the number of the plurality of onboard device keys and the plurality of ground device keys.

In step 508, the Radio Block Center combines the plurality of ground device keys and the plurality of onboard device keys, and stores them into a cache.

In step 509, the Radio Block Center determines a second number of devices according to request sent by a communicating unit, sends the ground device key and the onboard device key required in the current communication scheme to the communicating unit when the second number is equal to the first number. That is, when the number of the ground device key and the onboard device key required in the current communication scheme is equivalent to the number of the devices that request to communicate, the ground device key and the onboard device key required in the current communication scheme are sent to the communicating unit.

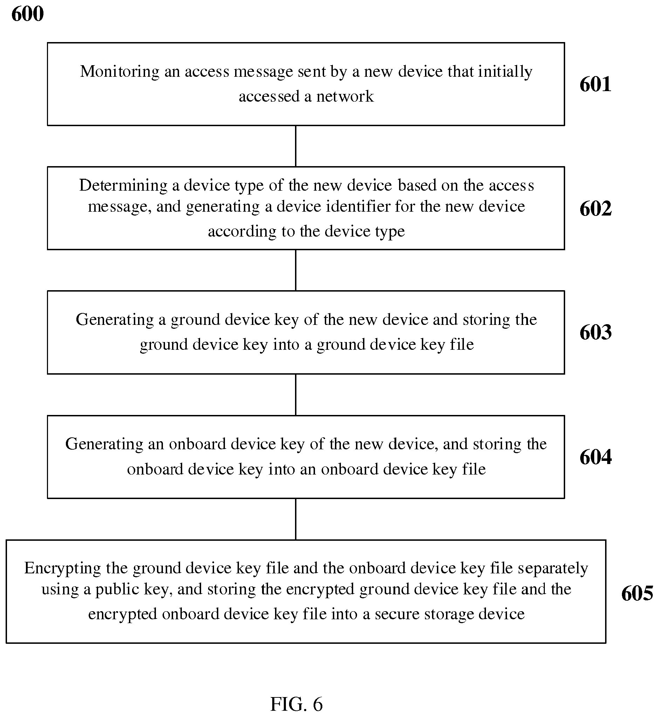

FIG. 6 is a schematic structural diagram of a method 600 for classifying and storing keys in accordance with a preferred embodiment of the present disclosure. In the method 600, the monitoring unit is capable of determining a device type of the new device based on the access message, and generating a device identifier for the new device according to the device type. When the device type is a ground device, the method 600 generates a ground device key of the new device according to a uniform root key of a ground area where the new device is located and the device identifier and stores the ground device key in a ground device key file. When the device type is an onboard device, the method 600 computes a hash value of the device identifier, and generates an onboard device key of the new device according to the hash value, stores the onboard device key into the onboard key file. The method 600 encrypts the ground device key file and the onboard device key file separately using a public key, and stores the encrypted ground device key file and the encrypted onboard device key file in the secure storage device.

As shown in FIG. 6, the method 600 starts from step 601. In step 601, a access message sent by a new device that initially accessed a network is monitored. The access message carries the following content related to the new device: device type, device model, software version, and device power consumption. Usually, when a new device accessed the network, an access message needs to be sent to notify other devices.

In step 602, a device type of the new device is determined based on the access message, and a device identifier for the new device is generated according to the device type, wherein the device type includes a ground device and an onboard device. When the device type is a ground device, the method 600 generates for the new device a device identifier that identifies the ground device. When the device type is an onboard device, the method 600 generates for the new device a device identifier that identifies the onboard device.

In step 603, further, when the device type is a ground device, the method 600 generates a ground device key of the new device according to a uniform root key of a ground area where the new device is located and the device identifier and stores the ground device key into a ground device key file. A different ground area has a unique uniform root key, and a correspondence table of ground areas and uniform root keys is stored in the secure storage device. The ground device key comprises a fixed portion and a derivative portion, the fixed portion can be used to identify a ground area where the ground equipment is located, and the derivative portion can identify the ground device.

In step 604, when the device type is an onboard device, the method 600 computes a hash value of the device identifier, and generates an onboard device key of the new device according to the hash value. The key generating unit calculates a hash value of the device identifier comprises: calculating a hash value of the device identifier based on MD5 or SHA-1. After generating the onboard device key, the method 600 stores the onboard device key into an onboard device key file.

In step 605, the ground device key file and the onboard device key file are encrypted separately using a public key, and the encrypted ground device key file and the encrypted onboard device key file are stored in the secure storage device. After the ground device key file and the onboard device key file separately are encrypted using a public key by the secure storage device, a private key corresponding to the public key is sent to a Radio Block Center.

The Radio Block Center obtains the encrypted ground device key file and the encrypted onboard device key file from the secure storage device. The Radio Block Center decrypts the encrypted ground device key file by using the private key to obtain a ground device key file, obtains a plurality of ground device keys from the ground device key file, and determines the number of the plurality of ground device keys. The Radio Block Center decrypts the encrypted onboard device key file by using the private key to obtain an onboard device key file, obtains a plurality of onboard device keys from the onboard device key file, and determines the number of the plurality of onboard device keys. The Radio Block Center combines the plurality of ground device keys and the plurality of onboard device keys, stores them into a cache, and determines a first number of ground device keys and onboard device keys required in a current communication scheme. The Radio Block Center determines a second number of devices according to request sent by a communicating unit, and sends the ground device key and the onboard device key required in the current communication scheme to the communicating unit when the second number is equal to the first number. That is, when the number of the ground device key and the onboard device key required in the current communication scheme is equivalent to the number of the devices that request to communicate, the ground device key and the onboard device key required in the current communication scheme are sent to the communicating unit.

The present disclosure has been described with reference to a few embodiments. However, it is well known to a person skilled in the art that, as defined by the appended claims, embodiments other than those disclosed in the above by the present disclosure are equivalently included within the scope of the present disclosure.

In general, all terms used in the claims are to be interpreted according to their ordinary meaning in the technical field unless otherwise explicitly defined. All references to "one/the/said [device, component, etc.]" are openly interpreted as at least one instance of the device, component, etc., unless explicitly stated otherwise. The steps of any method disclosed herein are not necessarily in the precise order disclosed, unless explicitly stated.

## Claims

1. A method for classifying and storing keys in a train control system, the method comprising:
monitoring (601) an access message sent by a new device that initially accessed a network;
determining (602) a device type of the new device based on the access message, and generating a device identifier for the new device according to the device type, wherein the device type includes a ground device and an onboard device;
when the device type is a ground device, generating (603) a ground device key of the new device according to a uniform root key of a ground area where the new device is located and the device identifier, and storing the ground device key into a ground device key file;
when the device type is an onboard device, generating (604) an onboard device key of the new device according to the device identifier of the new device, and storing the onboard device key into an onboard device key file; and
separately storing (605) the ground device key file and the onboard device key file into a secure storage device.

2. The method of claim 1, further comprising: encrypting (605) the ground device key file and the onboard device key file separately using a public key, and storing (605) the encrypted ground device key file and the encrypted onboard device key file into the secure storage device;
the method preferably further comprising: after encrypting the ground device key file and the onboard device key file separately using a public key, sending a private key corresponding to the public key to a Radio Block Center.

3. The method of any of claims 1 to 2, wherein the access message carries the following content related to the new device: device type, device model, software version, and device power consumption.

4. The method of any of claims 1 to 3, wherein said generating a device identifier for the new device according to the device type comprises: when the device type is a ground device, generating for the new device a device identifier that identifies the ground device; and/or
when the device type is an onboard device, generating for the new device a device identifier that identifies the onboard device.

5. The method of any of claims 1 to 4, wherein a different ground area has a unique uniform root key, and a correspondence table of ground areas and uniform root keys is stored in the secure storage device; and/or
wherein the ground device key comprises a fixed portion and a derivative portion, the fixed portion can be used to identify a ground area where the ground equipment is located, and the derivative portion can identify the ground device.

6. The method of any of claims 1 to 5, comprising: calculating a hash value of the device identifier based on MD5 or SHA-1, and generating the onboard device key of the new device based on the hash value.

7. The method of any of claims 1 to 6, further comprising obtaining the encrypted ground device key file and the encrypted onboard device key file from the secure storage device after a Radio Block Center is activated;
wherein the Radio Block Center preferably decrypts the encrypted ground device key file by using the private key to obtain a ground device key file, obtains a plurality of ground device keys from the ground device key file, and determines the number of the plurality of ground device keys; and/or
wherein the Radio Block Center preferably decrypts the encrypted onboard device key file by using the private key to obtain an onboard device key file, obtains a plurality of onboard device keys from the onboard device key file, and determines the number of the plurality of onboard device keys.

8. The method of any of claims 1 to 7, wherein a Radio Block Center combines the plurality of ground device keys and the plurality of onboard device keys, stores them into a cache, and determines a first number of ground device keys and onboard device keys required in a current communication scheme; and/or
wherein the Radio Block Center determines a second number of devices according to request sent by a communicating unit, and sends the ground device key and the onboard device key required in the current communication scheme to the communicating unit when the second number is equal to the first number.

9. A train control system for classifying and storing keys, the system comprising:
a monitoring unit (401) for monitoring a access message sent by a new device that initially accessed a network;
an initializing unit (402) for determining a device type of the new device based on the access message, and generating a device identifier for the new device according to the device type, wherein the device type includes a ground device and an onboard device;
a key generating unit (403) for generating, when the device type is a ground device, a ground device key of the new device according to a uniform root key of a ground area where the new device is located and the device identifier and storing the ground device key into a ground device key file, and for generating, when the device type is an onboard device, an onboard device key of the new device according to the device identifier of the new device, and storing the onboard device key in an onboard device key file; and
a storing unit (404) configured for separately storing the ground device key file and the onboard device key file in a secure storage device.

10. The train control system of claim 9, further comprising: the storing unit (404) encrypts the ground device key file and the onboard device key file separately using a public key, and stores the encrypted ground device key file and the encrypted onboard device key file into the secure storage device;
wherein preferably, after the storing unit (404) encrypts the ground device key file and the onboard device key file separately using a public key, the storing unit (404) sends a private key corresponding to the public key to a Radio Block Center.

11. The train control system of any of claims 9 to 10, wherein the access message carries the following content related to the new device: device type, device model, software version, and device power consumption.

12. The train control system of any of claims 9 to 11, wherein the initializing unit (402) generates a device identifier for the new device according to the device type comprises: when the device type is a ground device, the initializing unit (402) generates for the new device a device identifier that identifies the ground device; and/or
when the device type is an onboard device, the initializing unit (402) generates for the new device a device identifier that identifies the onboard device.

13. The train control system of any of claims 9 to 12, wherein a different ground area has a unique uniform root key, and a correspondence table of ground areas and uniform root keys is stored in the secure storage device; and/or
wherein the ground device key comprises a fixed portion and a derivative portion, the fixed portion can be used to identify a ground area where the ground equipment is located, and the derivative portion can identify the ground device.

14. The train control system of any of claims 9 to 13, wherein the key generating unit (403) calculates a hash value of the device identifier comprises: calculating a hash value of the device identifier based on MD5 or SHA-1, and generating the onboard device key of the new device based on the hash value.

15. The train control system of any of claims 9 to 14, further comprising:
a Radio Block Center obtains the encrypted ground device key file and the encrypted onboard device key file from the secure storage device;
wherein the Radio Block Center preferably decrypts the encrypted ground device key file by using the private key to obtain a ground device key file, obtains a plurality of ground device keys from the ground device key file, and determines the number of the plurality of ground device keys; and/or
wherein the Radio Block Center preferably decrypts the encrypted onboard device key file by using the private key to obtain an onboard device key file, obtains a plurality of onboard device keys from the onboard device key file, and determines the number of the plurality of onboard device keys; and/or
wherein the Radio Block Center preferably combines the plurality of ground device keys and the plurality of onboard device keys, stores them into a cache, and determines a first number of ground device keys and onboard device keys required in a current communication scheme; and/or
wherein the Radio Block Center preferably determines a second number of devices according to request sent by a communicating unit, and sends the ground device key and the onboard device key required in the current communication scheme to the communicating unit when the second number is equal to the first number.

## Patentansprüche

1. Verfahren zum Klassifizieren und Speichern von Schlüsseln in einem Zugsteuersystem, das Verfahren umfassend:
Überwachen (601) einer Zugriffsnachricht, die von einer neuen Vorrichtung gesendet wurde, die erstmals auf ein Netzwerk zugegriffen hat;
Ermitteln (602) einer Vorrichtungsart der neuen Vorrichtung auf Grundlage der Zugriffsnachricht und Erzeugen einer Vorrichtungskennung für die neue Vorrichtung gemäß der Vorrichtungsart, wobei zu der Vorrichtungsart eine Bodenvorrichtung und eine Bordvorrichtung gehören;
wenn die Vorrichtungsart eine Bodenvorrichtung ist, Erzeugen (603) eines Bodenvorrichtungsschlüssels der neuen Vorrichtung gemäß einem einheitlichen Stammschlüssel eines Bodenbereichs, in dem sich die neue Vorrichtung befindet, und der Vorrichtungskennung, und Speichern des Bodenvorrichtungsschlüssels in einer Bodenvorrichtungsschlüsseldatei;
wenn die Vorrichtungsart eine Bordvorrichtung ist, Erzeugen (604) eines Bordvorrichtungsschlüssels der neuen Vorrichtung gemäß der Vorrichtungskennung der neuen Vorrichtung und Speichern des Bordvorrichtungsschlüssels in einer Bordvorrichtungsschlüsseldatei; und
getrenntes Speichern (605) der Bodenvorrichtungsschlüsseldatei und der Bordvorrichtungsschlüsseldatei in einer sicheren Speichervorrichtung.

2. Verfahren nach Anspruch 1, ferner umfassend: getrenntes Verschlüsseln (605) der Bodenvorrichtungsschlüsseldatei und der Bordvorrichtungsschlüsseldatei unter Verwendung eines öffentlichen Schlüssels, und Speichern (605) der verschlüsselten Bodenvorrichtungsschlüsseldatei und der verschlüsselten Bordvorrichtungsschlüsseldatei in der sicheren Speichervorrichtung;
wobei das Verfahren vorzugsweise ferner umfasst: nach dem getrennten Verschlüsseln der Bodenvorrichtungsschlüsseldatei und der Bordvorrichtungsschlüsseldatei unter Verwendung eines öffentlichen Schlüssels, Senden eines privaten Schlüssels, der zu dem öffentlichen Schlüssel gehört, an ein Radio Block Center.

3. Verfahren nach einem der Ansprüche 1 bis 2, wobei die Zugriffsnachricht den folgenden Inhalt in Bezug auf die neue Vorrichtung enthält: Vorrichtungsart, Vorrichtungsmodell, Softwareversion und Stromverbrauch der Vorrichtung.

4. Verfahren nach einem der Ansprüche 1 bis 3, wobei das Erzeugen einer Vorrichtungskennung für die neue Vorrichtung gemäß der Vorrichtungsart umfasst:
wenn die Vorrichtungsart eine Bodenvorrichtung ist, Erzeugen einer Vorrichtungskennung für die neue Vorrichtung, die sie als Bodenvorrichtung kennzeichnet; und/oder
wenn die Vorrichtungsart eine Bordvorrichtung ist, Erzeugen einer Vorrichtungskennung für die neue Vorrichtung, die sie als Bordvorrichtung kennzeichnet.

5. Verfahren nach einem der Ansprüche 1 bis 4, wobei ein weiterer Bodenbereich einen eindeutigen einheitlichen Stammschlüssel aufweist, und eine Korrespondenztabelle von Bodenbereichen und einheitlichen Stammschlüsseln in der sicheren Speichervorrichtung gespeichert wird; und/oder
wobei der Bodenvorrichtungsschlüssel einen festen Abschnitt und einen abgeleiteten Abschnitt enthält, der feste Abschnitt zum Kennzeichnen eines Bodenbereichs verwendet werden kann, in dem sich die Bodenvorrichtung befindet, und der abgeleitete Abschnitt die Bodenvorrichtung kennzeichnen kann.

6. Verfahren nach einem der Ansprüche 1 bis 5, umfassend: Berechnen eines Hash-Werts der Vorrichtungskennung auf Grundlage von MD5 oder SHA-1, und Erzeugen des Bordvorrichtungsschlüssels der neuen Vorrichtung auf Grundlage des Hash-Werts.

7. Verfahren nach einem der Ansprüche 1 bis 6, ferner umfassend ein Erhalten der verschlüsselten Bodenvorrichtungsschlüsseldatei und der verschlüsselten Bordvorrichtungsschlüsseldatei aus der sicheren Speichervorrichtung, nachdem ein Radio Block Center aktiviert wurde;
wobei das Radio Block Center vorzugsweise die verschlüsselte Bodenvorrichtungsschlüsseldatei unter Verwendung des privaten Schlüssels entschlüsselt, um eine Bodenvorrichtungsschlüsseldatei zu erhalten, mehrere Bodenvorrichtungsschlüssel aus der Bodenvorrichtungsschlüsseldatei abruft und die Anzahl der mehreren Bodenvorrichtungsschlüssel ermittelt; und/oder
wobei das Radio Block Center vorzugsweise die verschlüsselte Bordvorrichtungsschlüsseldatei unter Verwendung des privaten Schlüssels entschlüsselt, um eine Bordvorrichtungsschlüsseldatei zu erhalten, mehrere Bordvorrichtungsschlüssel aus der Bordvorrichtungsschlüsseldatei abruft und die Anzahl der mehreren Bordvorrichtungsschlüssel ermittelt.

8. Verfahren nach einem der Ansprüche 1 bis 7, wobei ein Radio Block Center die mehreren Bodenvorrichtungsschlüssel und die mehreren Bordvorrichtungsschlüssel verbindet, sie in einem Cache speichert und eine erste Anzahl der erforderlichen Bodenvorrichtungsschlüssel und Bordvorrichtungsschlüssel ermittelt, die in einem aktuellen Datenübertragungsschema erforderlich sind; und/oder
wobei das Radio Block Center eine zweite Anzahl von Vorrichtungen gemäß einer Anfrage ermittelt, die von einer Datenübertragungseinheit gesendet wurde, und den Bodenvorrichtungsschlüssel und den Bordvorrichtungsschlüssel, die im aktuellen Datenübertragungsschema erforderlich sind, an die Datenübertragungseinheit sendet, wenn die zweite Anzahl gleich der ersten Anzahl ist.

9. Zugsteuersystem zum Klassifizieren und Speichern von Schlüsseln, wobei das System aufweist:
eine Überwachungseinheit (401) zum Überwachen einer Zugriffsnachricht, die von einer neuen Vorrichtung gesendet wurde, die erstmals auf ein Netzwerk zugegriffen hat;
eine Initialisierungseinheit (402) zum Ermitteln einer Vorrichtungsart der neuen Vorrichtung auf Grundlage der Zugriffsnachricht und zum Erzeugen einer Vorrichtungskennung für die neue Vorrichtung gemäß der Vorrichtungsart, wobei zu der Vorrichtungsart eine Bodenvorrichtung und eine Bordvorrichtung gehören;
eine Schlüsselerzeugungseinheit (403) zum Erzeugen eines Bodenvorrichtungsschlüssels der neuen Vorrichtung gemäß einem einheitlichen Stammschlüssel eines Bodenbereichs, in dem sich die neue Vorrichtung befindet, wenn die Vorrichtungsart eine Bodenvorrichtung ist, und der Vorrichtungskennung und zum Speichern des Bodenvorrichtungsschlüssels in einer Bodenvorrichtungsschlüsseldatei und, wenn die Vorrichtungsart eine Bordvorrichtung ist, zum Berechnen eines Hash-Werts der Vorrichtungskennung, Erzeugen eines Bordvorrichtungsschlüssels der neuen Vorrichtung gemäß dem Hash-Wert und Speichern des Bordvorrichtungsschlüssels in einer Bordvorrichtungsschlüsseldatei; und
eine Speichereinheit (404), die zum getrennten Speichern der Bodenvorrichtungsschlüsseldatei und der Bordvorrichtungsschlüsseldatei in einer sicheren Speichervorrichtung konfiguriert ist.

10. Zugsteuersystem nach Anspruch 9, das ferner umfasst: die Speichereinheit (404), die die Bodenvorrichtungsschlüsseldatei und die Bordvorrichtungsschlüsseldatei getrennt unter Verwendung eines öffentlichen Schlüssels verschlüsselt und die verschlüsselte Bodenvorrichtungsschlüsseldatei und die verschlüsselte Bordvorrichtungsschlüsseldatei in der sicheren Speichervorrichtung speichert;
wobei vorzugsweise, nachdem die Speichereinheit (404) die Bodenvorrichtungsschlüsseldatei und die Bordvorrichtungsschlüsseldatei getrennt mit einem öffentlichen Schlüssel verschlüsselt hat, die Speichereinheit (404) einen privaten Schlüssel, der zu dem öffentlichen Schlüssel gehört, an ein Radio Block Center sendet.

11. Zugsteuersystem nach einem der Ansprüche 9 bis 10, wobei die Zugriffsnachricht den folgenden Inhalt in Bezug auf die neue Vorrichtung enthält: Vorrichtungsart, Vorrichtungsmodell, Softwareversion und Stromverbrauch der Vorrichtung.

12. Zugsteuersystem nach einem der Ansprüche 9 bis 11, wobei das Erzeugen einer Vorrichtungskennung für die neue Vorrichtung gemäß der Vorrichtungsart durch die Initialisierungseinheit (402) umfasst:
wenn die Vorrichtungsart eine Bodenvorrichtung ist, erzeugt die Initialisierungseinheit (402) für die neue Vorrichtung eine Vorrichtungskennung, die sie als Bodenvorrichtung kennzeichnet; und/oder
wenn die Vorrichtungsart eine Bordvorrichtung ist, erzeugt die Initialisierungseinheit (402) für die neue Vorrichtung eine Vorrichtungskennung, die sie als Bordvorrichtung kennzeichnet.

13. Zugsteuersystem nach einem der Ansprüche 9 bis 12, wobei ein weiterer Bodenbereich einen eindeutigen einheitlichen Stammschlüssel aufweist, und eine Korrespondenztabelle von Bodenbereichen und einheitlichen Stammschlüsseln in der sicheren Speichervorrichtung gespeichert wird; und/oder
wobei der Bodenvorrichtungsschlüssel einen festen Abschnitt und einen abgeleiteten Abschnitt enthält, der feste Abschnitt zum Kennzeichnen eines Bodenbereichs verwendet werden kann, in dem sich die Bodenvorrichtung befindet, und der abgeleitete Abschnitt die Bodenvorrichtung kennzeichnen kann.

14. Zugsteuersystem nach einem der Ansprüche 9 bis 13, wobei das Berechnen eines Hash-Werts der Vorrichtungskennung durch die Schlüsselerzeugungseinheit (403) umfasst: Berechnen eines Hash-Werts der Vorrichtungskennung auf Grundlage von MD5 oder SHA-1 und Erzeugen des Bordvorrichtungsschlüssels der neuen Vorrichtung auf Grundlage des Hash-Werts.

15. Zugsteuersystem nach einem der Ansprüche 9 bis 14, das ferner umfasst:
ein Radio Block Center, das die verschlüsselte Bodenvorrichtungsschlüsseldatei und die verschlüsselte Bordvorrichtungsschlüsseldatei von der sicheren Speichervorrichtung erhält;
wobei das Radio Block Center vorzugsweise die verschlüsselte Bodenvorrichtungsschlüsseldatei unter Verwendung des privaten Schlüssels entschlüsselt, um eine Bodenvorrichtungsschlüsseldatei zu erhalten, mehrere Bodenvorrichtungsschlüssel aus der Bodenvorrichtungsschlüsseldatei abruft und die Anzahl der mehreren Bodenvorrichtungsschlüssel ermittelt; und/oder
wobei das Radio Block Center die verschlüsselte Bordvorrichtungsschlüsseldatei unter Verwendung des privaten Schlüssels entschlüsselt, um eine Bordvorrichtungsschlüsseldatei zu erhalten, mehrere Bordvorrichtungsschlüssel aus der Bordvorrichtungsschlüsseldatei abruft und die Anzahl der mehreren Bordvorrichtungsschlüssel ermittelt; und/oder
wobei das Radio Block Center vorzugsweise die mehreren Bodenvorrichtungsschlüssel und die mehreren Bordvorrichtungsschlüssel verbindet, sie in einem Cache speichert und eine erste Anzahl der Bodenvorrichtungsschlüssel und Bordvorrichtungsschlüssel ermittelt, die in einem aktuellen Datenübertragungsschema erforderlich sind; und/oder
wobei das Radio Block Center vorzugsweise eine zweite Anzahl der Vorrichtungen gemäß der Anfrage ermittelt, die von einer Datenübertragungseinheit gesendet wurde, und den Bodenvorrichtungsschlüssel und den Bordvorrichtungsschlüssel, die im aktuellen Datenübertragungsschema erforderlich sind, an die Datenübertragungseinheit sendet, wenn die zweite Anzahl gleich der ersten Anzahl ist.

## Revendications

1. Procédé de classification et de stockage de clés dans un système de contrôle des trains, le procédé comprenant les étapes ci-dessous consistant à :
surveiller (601) un message d'accès envoyé par un nouveau dispositif ayant initialement accédé à un réseau ;
déterminer (602) un type de dispositif du nouveau dispositif sur la base du message d'accès, et générer un identifiant de dispositif pour le nouveau dispositif selon le type de dispositif, dans lequel le type de dispositif inclut un dispositif au sol et un dispositif embarqué ;
lorsque le type de dispositif est un dispositif au sol, générer (603) une clé de dispositif au sol du nouveau dispositif selon une clé racine uniforme d'une zone au sol où le nouveau dispositif est situé, et selon l'identifiant de dispositif, et stocker la clé de dispositif au sol dans un fichier de clés de dispositif au sol ;
lorsque le type de dispositif est un dispositif embarqué, générer (604) une clé de dispositif embarqué du nouveau dispositif selon l'identifiant de dispositif du nouveau dispositif, et stocker la clé de dispositif embarqué dans un fichier de clés de dispositif embarqué ; et
stocker séparément (605) le fichier de clés de dispositif au sol et le fichier de clés de dispositif embarqué dans un dispositif de stockage sécurisé.

2. Procédé selon la revendication 1, comprenant en outre les étapes ci-après consistant à : chiffrer (605) le fichier de clés de dispositif au sol et le fichier de clés de dispositif embarqué séparément à l'aide d'une clé publique, et stocker (605) le fichier de clés de dispositif au sol chiffré et le fichier de clés de dispositif embarqué chiffré dans le dispositif de stockage sécurisé ;
le procédé comprenant de préférence en outre l'étape ci-après consistant à : après avoir chiffré le fichier de clés de dispositif au sol et le fichier de clés de dispositif embarqué séparément à l'aide d'une clé publique, envoyer une clé privée correspondant à la clé publique à un centre de bloc radio.

3. Procédé selon l'une quelconque des revendications 1 à 2, dans lequel le message d'accès transporte le contenu suivant relatif au nouveau dispositif : le type de dispositif, le modèle de dispositif, la version logicielle et la consommation électrique de dispositif.

4. Procédé selon l'une quelconque des revendications 1 à 3, dans lequel ladite étape de génération d'un identifiant de dispositif pour le nouveau dispositif selon le type de dispositif consiste à :
lorsque le type de dispositif est un dispositif au sol, générer, pour le nouveau dispositif, un identifiant de dispositif qui identifie le dispositif au sol ; et/ou
lorsque le type de dispositif est un dispositif embarqué, générer, pour le nouveau dispositif, un identifiant de dispositif qui identifie le dispositif embarqué.

5. Procédé selon l'une quelconque des revendications 1 à 4, dans lequel une zone au sol différente présente une clé racine uniforme unique, et une table de correspondance de zones au sol et de clés racines uniformes est stockée dans le dispositif de stockage sécurisé ; et/ou
dans lequel la clé de dispositif au sol comprend une partie fixe et une partie dérivée, dans laquelle la partie fixe peut être utilisée en vue d'identifier une zone au sol où l'équipement au sol est localisé, et la partie dérivée peut identifier le dispositif au sol.

6. Procédé selon l'une quelconque des revendications 1 à 5, comprenant les étapes ci-après consistant à : calculer une valeur de hachage de l'identifiant de dispositif sur la base de l'algorithme de hachage MD5 ou SHA-1, et générer la clé de dispositif embarqué du nouveau dispositif sur la base de la valeur de hachage.

7. Procédé selon l'une quelconque des revendications 1 à 6, comprenant en outre l'étape consistant à obtenir le fichier de clés de dispositif au sol chiffré et le fichier de clés de dispositif embarqué chiffré auprès du dispositif de stockage sécurisé, après l'activation d'un centre de bloc radio ;
dans lequel le centre de bloc radio déchiffre de préférence le fichier de clés de dispositif au sol chiffré, en utilisant la clé privée, en vue d'obtenir un fichier de clés de dispositif au sol, obtient une pluralité de clés de dispositif au sol à partir du fichier de clés de dispositif au sol, et détermine le nombre de la pluralité de clés de dispositif au sol ; et/ou
dans lequel le centre de bloc radio déchiffre de préférence le fichier de clés de dispositif embarqué chiffré, en utilisant la clé privée, en vue d'obtenir un fichier de clés de dispositif embarqué, obtient une pluralité de clés de dispositif embarqué à partir du fichier de clés de dispositif embarqué, et détermine le nombre de la pluralité de clés de dispositif embarqué.

8. Procédé selon l'une quelconque des revendications 1 à 7, dans lequel un centre de bloc radio combine la pluralité de clés de dispositif au sol et la pluralité de clés de dispositif embarqué, les stocke dans une mémoire cache, et détermine un premier nombre de clés de dispositif au sol et de clés de dispositif embarqué requises dans un schéma de communication en cours ; et/ou
dans lequel le centre de bloc radio détermine un deuxième nombre de dispositifs selon une demande envoyée par une unité de communication, et envoie la clé de dispositif au sol et la clé de dispositif embarqué requises dans le schéma de communication en cours à l'unité de communication lorsque le deuxième nombre est égal au premier nombre.

9. Système de contrôle des trains permettant de classer et de stocker des clés, le système comprenant :
une unité de surveillance (401) destinée à surveiller un message d'accès envoyé par un nouveau dispositif ayant initialement accédé à un réseau ;
une unité d'initialisation (402) destinée à déterminer un type de dispositif du nouveau dispositif sur la base du message d'accès, et à générer un identifiant de dispositif pour le nouveau dispositif selon le type de dispositif, dans lequel le type de dispositif inclut un dispositif au sol et un dispositif embarqué ;
une unité de génération de clés (403) destinée à générer, lorsque le type de dispositif est un dispositif au sol, une clé de dispositif au sol du nouveau dispositif selon une clé racine uniforme d'une zone au sol où le nouveau dispositif est localisé, et selon l'identifiant de dispositif, et à stocker la clé de dispositif au sol dans un fichier de clés de dispositif au sol, et à générer, lorsque le type de dispositif est un dispositif embarqué, une clé de dispositif embarqué du nouveau dispositif selon l'identifiant de dispositif du nouveau dispositif, et à stocker la clé de dispositif embarqué dans un fichier de clés de dispositif embarqué ; et
une unité de stockage (404) configurée de manière à stocker séparément le fichier de clés de dispositif au sol et le fichier de clés de dispositif embarqué dans un dispositif de stockage sécurisé.

10. Système de contrôle des trains selon la revendication 9, dans lequel en outre : l'unité de stockage (404) chiffre le fichier de clés de dispositif au sol et le fichier de clés de dispositif embarqué séparément à l'aide d'une clé publique, et stocke le fichier de clés de dispositif au sol chiffré et le fichier de clés de dispositif embarqué chiffré dans le dispositif de stockage sécurisé ;
dans lequel, de préférence, après que l'unité de stockage (404) a chiffré le fichier de clés de dispositif au sol et le fichier de clés de dispositif embarqué séparément à l'aide d'une clé publique, l'unité de stockage (404) envoie une clé privée correspondant à la clé publique à un centre de bloc radio.

11. Système de contrôle des trains selon l'une quelconque des revendications 9 à 10, dans lequel le message d'accès transporte le contenu suivant relatif au nouveau dispositif : le type de dispositif, le modèle de dispositif, la version logicielle et la consommation électrique de dispositif.

12. Système de contrôle des trains selon l'une quelconque des revendications 9 à 11, dans lequel, l'étape dans laquelle l'unité d'initialisation (402) génère un identifiant de dispositif pour le nouveau dispositif selon le type de dispositif comprend les étapes ci-dessous dans lesquelles :
lorsque le type de dispositif est un dispositif au sol, l'unité d'initialisation (402) génère, pour le nouveau dispositif, un identifiant de dispositif qui identifie le dispositif au sol ; et/ou
lorsque le type de dispositif est un dispositif embarqué, l'unité d'initialisation (402) génère, pour le nouveau dispositif, un identifiant de dispositif qui identifie le dispositif embarqué.

13. Système de contrôle des trains selon l'une quelconque des revendications 9 à 12, dans lequel une zone au sol différente présente une clé racine uniforme unique, et une table de correspondance de zones au sol et de clés racines uniformes est stockée dans le dispositif de stockage sécurisé ; et/ou
dans lequel la clé de dispositif au sol comprend une partie fixe et une partie dérivée, dans laquelle la partie fixe peut être utilisée en vue d'identifier une zone au sol où l'équipement au sol est localisé, et la partie dérivée peut identifier le dispositif au sol.

14. Système de contrôle des trains selon l'une quelconque des revendications 9 à 13, dans lequel, l'étape dans laquelle l'unité de génération de clés (403) calcule une valeur de hachage de l'identifiant de dispositif comprend les étapes ci-après consistant à : calculer une valeur de hachage de l'identifiant de dispositif sur la base de l'algorithme de hachage MD5 ou SHA-1, et générer la clé de dispositif embarqué du nouveau dispositif sur la base de la valeur de hachage.

15. Système de contrôle des trains selon l'une quelconque des revendications 9 à 14, comprenant en outre l'étape ci-après dans laquelle : un centre de bloc radio obtient le fichier de clés de dispositif au sol chiffré et le fichier de clés de dispositif embarqué chiffré auprès du dispositif de stockage sécurisé ;
dans lequel le centre de bloc radio déchiffre de préférence le fichier de clés de dispositif au sol chiffré à l'aide de la clé privée, en vue d'obtenir un fichier de clés de dispositif au sol, obtient une pluralité de clés de dispositif au sol à partir du fichier de clés de dispositif au sol, et détermine le nombre de la pluralité de clés de dispositif au sol ; et/ou
dans lequel le centre de bloc radio déchiffre de préférence le fichier de clés de dispositif embarqué chiffré à l'aide de la clé privée, en vue d'obtenir un fichier de clés de dispositif embarqué, obtient une pluralité de clés de dispositif embarqué à partir du fichier de clés de dispositif embarqué, et détermine le nombre de la pluralité de clés de dispositif embarqué ; et/ou
dans lequel le centre de bloc radio combine de préférence la pluralité de clés de dispositif au sol et la pluralité de clés de dispositif embarqué, les stocke dans une mémoire cache, et détermine un premier nombre de clés de dispositif au sol et de clés de dispositif embarqué requises dans un schéma de communication en cours ; et/ou
dans lequel le centre de bloc radio détermine de préférence un deuxième nombre de dispositifs selon une demande envoyée par une unité de communication, et envoie la clé de dispositif au sol et la clé de dispositif embarqué requises dans le schéma de communication en cours, à l'unité de communication, lorsque le deuxième nombre est égal au premier.
